# EUROPÄISCHE PATENTSCHRIFT

(11) **EP 1 845 326 B1**
(45) Veröffentlichungstag und Bekanntmachung des Hinweises auf die Patenterteilung: **22.07.2015**
(21) Anmeldenummer: 07007398.6
(22) Anmeldetag: 11.04.2007
(51) Int. Cl.: F28D 7/14, F28F 9/04, F16L 37/00, F25B 40/02, F16L 37/088, F16L 37/098

(54) **Kältemachine mit inneren Kältemaschinen-Wärmetauscher**
Chiller with interior cooler-heat exchanger
Machines frigorifiques avec échangeur thermique interne

(30) Priorität: 13.04.2006 DE 102006017816
(43) Veröffentlichungstag der Anmeldung: 17.10.2007
(73) Patentinhaber: Eaton Industrial IP GmbH & Co. KG, 12529 Schönefeld (DE)
(72) Erfinder: Klug, Peter, 76135 Karlsruhe (DE); Buchmüller, Daniel, 76474 Au am Rhein (DE); Welle, Stefan, 76549 Hügelsheim (DE)
(74) Vertreter: Eaton IP Group EMEA

(56) Entgegenhaltungen:
- EP-A1- 1 101 638
- EP-A2- 0 467 381
- EP-A2- 1 790 931
- DE-A1-102004 052 475
- DE-C1- 19 708 377
- FR-A1- 2 507 759
- US-A- 6 098 704
- US-A1- 2002 113 431

## Beschreibung

Die Erfindung betrifft einen Wärmetauscher für eine Kältemaschine, mit dem das dem Kältemaschinenkompressor zugeführte Kältemittel vorgewärmt wird.

Kältemaschinen, beispielsweise von Klimaanlagen, wie beispielsweise von Kraftfahrzeugen, werden häufig mit so genannten inneren Wärmetauschern ausgerüstet. Dazu offenbart die DE 100 53 000 A1 eine Kältemaschine, die mit Kohlendioxid als Kältemittel arbeitet. Die Kältemaschine ist insgesamt für einen hohen Arbeitsdruck und für einen Berstdruck von 700 bar ausgelegt. Dem Kompressor wird das Kältemittel über den inneren Wärmetauscher zugeführt, der ein Wärmetauscherrohr bildet. Das von der Kältemaschine verdichtete und im Kondensator abgekühlte Kältemittel wird dann im Gegenstrom wiederum durch das Wärmetauscherrohr geführt, um das dem Kompressor zuströmende Kohlendioxid aufzuwärmen. Als Hochdruckkanal für das verflüssigte Kohlendioxid weist der als Wärmetauscherrohr ausgebildete Wärmetauscher einen Zentralkanal auf, der zur Verbesserung des Wärmeaustauschs mit einer gerippten Wandung versehen ist. Um den inneren Kanal herum ist eine Vielzahl von Außenkanälen vorgesehen, die von einander durch radial orientierte Zwischenwände getrennt sind. Die Querschnittsfläche jedes der außen liegenden Kanäle ist geringer als die Querschnittsfläche des zentralen Hochdruckkanals. Die Summe der Querschnittsflächen der außen liegenden Niederdruckkanäle ist größer als die Querschnittsfläche des innen liegenden Hochdruckkanals. Das Wärmetauscherrohr wird durch ein Aluminiumstrangpressprofil gebildet. Weiter ist aus der EP 1 790 931 A2 Stand der Technik nach Art. 54(3) ein Wärmetauscherrohr mit zentralem Innenkanal und vierzehn um ihn herum angeordnete, in der Rohraußenwand ausgebildeten Kanälen bekannt. Zur Verbesserung der Wärmeübertragung sind an der inneren Wandung Rippen angeordnet. Die US 6 098 704 A beschreibt ein Wärmetauscherrohr, das aus einem glatten Innenrohr und einem innen verrippten Außenrohr besteht, in das das Innenrohr eingeschoben ist. Die nach innen ragenden Rippen des Außenrohrs grenzen neun Außenkanäle ab. Dagegen offenbart die EP 1 101 638 Alein ähnliches, innen glattes Wärmetauscherrohr mit drei bis fünf Außenkanälen.

Dieses Wärmetauscherrohr ist für mit hohem Druck arbeitende CO₂-Kältemaschinen geeignet. Es eignet sich jedoch weniger oder nicht für Kältemaschinen, die mit anderen Kältemitteln arbeiten. Es verursacht insbesondere auf der Saugseite der Kältemaschine einen Druckverlust, der bei CO₂ und entsprechend hohen Drücken keine Rolle spielt. Bei niedrigeren Arbeitsdrücken wird er jedoch spürbar und führt zu erheblichen Effizienzverlusten der Kältemaschine.

Um eine ausreichende Wärmeübertragung zwischen dem Hochdruckkanal und dem Niederdruckkanal zu ermöglichen, ist eine gewisse Rohrlänge des Wärmetauschers erforderlich. Um diese in einer Kältemaschine unterzubringen, ist es insbesondere bei beengten Platzverhältnissen, wie sie in Kraftfahrzeugen anzutreffen sind, häufig unumgänglich, den inneren Wärmetauscher als U-Rohr oder anderweitig auszufiihren. Dies setzt voraus, dass das Wärmetauscherrohr ausreichend biegsam ausgebildet ist, so dass es verformt werden kann, ohne dass seine Kanäle kollabieren.

Davon ausgehend ist es Aufgabe der Erfindung, eine Kältemaschine mit einem Kältemaschinen-Wärmetauscher zu schaffen, der sich durch hohe Effizienz auszeichnet, auch wenn die Kältemaschine nicht mit CO₂ betrieben wird.

Diese Aufgabe wird durch eine Kältemaschine mit einem inneren Kältemaschinen-Wärmetauscher gemäß Anspruch 1 gelöst.

Der Kältemaschinen-Wärmetauscher ist zum Wärmeaustausch innerhalb der Kältemaschine zum Kühlen des dem Verdampfer zuströmenden Kältemittels und zum Wiedererwärmen des aus dem Verdampfer kommenden Kaltdampf vorgesehen. Er wird aufgrund seiner Eignung für diese spezifische Aufgabe als innerer Kältemaschinen-Wärmetauscher bezeichnet. Erfindungsgemäß besteht er aus einem Rohr, das einen inneren Niederdruckkanal zum Anschluss an die Saugseite des Kältemittelkompressors und Hochdruckkanäle aufweist, die zu dem Verdampfer führen. Der Niederdruckkanal weist einen im Wesentlichen zylindrischen, nicht unterteilten Querschnitt auf. Er kann exakt zylindrisch oder auch davon geringfügig abweichend z.B. vieleckig, insbesondere mit gerundeten Ecken ausgebildet sein. Jedenfalls sind entlang seiner Wandung keine Durchmesservariationen zu verzeichnen, die einen vernachlässigbare Prozentsatz von 5 % bis 10 % übersteigen würden. Idealerweise sind die Durchmesservariationen kleiner als 10 %, kleiner als 5 %, vorzugsweise viel geringer als 5 %.

Die Hochdruckkanäle sind außen um den Niederdruckkanal herum angeordnet und stimmen in ihrem Querschnitt vorzugsweise miteinander überein. Die Summe der Querschnittsflächen der außen liegenden Hochdruckkanäle bildet eine Außenquerschnittsfläche; die deutlich geringer ist als die Innenquerschnittsfläche. Durch diese Maßnahmen wird erreicht, dass der an die Saugseite des Kältemittelkompressors anzuschließende innenliegende Niederdruckkanal nahezu keine nennenswerten Druckverluste erzeugt. Vorzugsweise ist der Querschnitt des Niederdruckkanals mindesten genau so groß wie der Querschnitt zu- und abführender Rohre, wobei die Form des Querschnitts des Niederdruckkanals vorzugsweise mit der Querschnittsform der anschließenden Rohre übereinstimmt. Die zu- und abführenden Rohre haben vorzugsweise einen Durchmesser, der mit dem Durchmesser gängiger seriengemäßer Saugleitungen (mindestens 14 mm) übereinstimmt. Auf diese Weise werden auch Beschleunigungs- und Diffusorverluste im Übergang zwischen den Anschlussrohren und dem Niederdruckkanal vermieden oder minimiert.

Die Innenquerschnittsfläche ist vorzugsweise um mindestens 60% größer als die Außenquerschnittsfläche. Mit anderen Worten, während die Innenquerschnittsfläche als gegeben angesehen werden kann, wird die Außenquerschnittsfläche minimiert. Die dadurch im Hochdruckkanal auftretenden Druckverluste sind weitgehend unschädlich für die Effizienz der Kältemaschine. Jedoch wird der Außendurchmesser des Wärmetauscherrohres auf diese Weise auf ein Minimum reduziert. 25 mm können als obere Grenze gesetzt und bei dem erfindungsgemäßen Konzept immer eingehalten werden. Dadurch werden die sich aus dem beschränkten, zur Verfügung stehenden Platz ergebenden Forderungen erfüllt und es wird sichergestellt, dass das Wärmetauscherrohr noch ausreichend geringe Biegeradien gestattet.

Die Wandung des Niederdruckkanal ist glatt und unverrippt, um bei nahezu rechteckigem Strömungsprofil den über dem Niederdruckkanal auftretenden Druckabfall zu minimieren.

Vorzugsweise besteht das Rohr aus extrudiertem Leichtmetall, beispielsweise Aluminium. Es ist in diesem Fall einstückig ohne Klebe- oder Schweißstellen ausgebildet. Es kann endlos gefertigt und auf Länge geschnitten werden. Unterschiedliche Wärmetauscherlängen sind auf einfache Weise realisierbar. Alternativ kann das Wärmetauscherrohr aus zwei oder mehreren Teilen bestehen. Z.B. ist es möglich, den Niederdruckkanal durch ein innen und außen glattes Rohr zu bilden und dieses in ein äußeres, mit nach innen weisenden Rippen versehenes Rohr einzufügen. Alternativ kann der Niederdruckkanal durch ein innen glattes und außen geripptes Rohr gebildet sein, das in ein innen glattes Außenrohr eingeschoben ist.

Auch können sowohl Innenrohr als auch Außenrohr an der Außen- bzw. Innenseite (d.h. an den einander zugewandten Flächen) mit z.B. in Längsrichtung verlaufenden Rippen versehen sein. Die Teile (Außenrohr und Innenrohr) des gefügten Wärmetauscherrohr können miteinander verklebt, verschweißt, verpresst oder anderweitig verbunden sein oder auch unverbunden bleiben. Sie können aus gleichen oder unterschiedlichen Materialien bestehen. Während das innere Rohr z.B. aus Aluminium oder einem anderen Metall bestehen kann, kann das äußere Rohr ebenfalls aus Aluminium, einem anderen Metall oder auch Kunststoff, einem gegebenfalls durch Einlagen, z.B. Gewebeeinlagen, verstärkten Elastomer, einer Schlauchanordnung oder einem anderen Material bestehen.

Jeder Hochdruckkanal wird von einem radial innen liegenden Wandabschnitt, zwei in Umfangsrichtung voneinander beabstandeten radial orientierten Wandabschnitten und einem radial außen liegenden wiederum in Umfangsrichtung verlaufenden Wandabschnitt begrenzt, wobei der radial innen liegende, in Umfangsrichtung verlaufende Wandabschnitt länger ist als die radialen Wandabschnitte. Damit sind die außen liegenden Hochdruckkanäle in ihrer in Umfangsrichtung gemessenen Breite größer als in ihrer in Radialrichtung gemessenen Höhe. Dies kommt dem Wärmeübergang zugute. Andererseits bleiben die Querschnittsflächen der Hochdruckkanäle ausreichend groß, um eine einfache Fertigung im Strangpressverfahren zu ermöglichen.

Der radial innen liegende Wandabschnitt ist länger als das Dreifache der radialen Wandabschnitte. Damit ist die Anzahl der außen liegenden Hochdruckkanäle höchstensacht und im mindestens sechs. Das Wärmetauscherrohr ist dann rationell zu fertigen, es weist auch in den Hochdruckkanälen verhältnismäßig geringe Strömungswiderstände auf und kann auf einigermaßen geringe Biegeradien gebogen werden, ohne dass die Außenkanäle oder gar der Innenkanal wesentlich deformiert werden oder gar kollabieren.

Durch die Maximierung des Saugkanaldurchmessers und somit die Minimierung des Ansaugwiderstands des Kompressors verbunden mit der hohen Wärmeübertragung des ausreichend lang bemessenen Wärmeübertragerrohrs kann die Effizienz (COP - "Coefficient of Performance" oder Leistungszahl) verbessert werden. Bei gleicher Kälteleistung kann die aufgenommene Antriebsleistung und somit der zugeordnete Kraftstoffverbrauch gesenkt werden.

Der Wärmetauscher kann mit einer Kupplungseinrichtung versehen sein, die ein Aufnahmeteil aufweist, das als gesondertes Teil, wie beispielsweise Spritzgussteil oder dergleichen, hergestellt werden kann. Es kann z.B. durch Kleben mit einem Ende des Wärmetauscherrohrs verbunden werden. Der sich als Rohr von dem Wärmetauscher weg erstreckende Innenkanal kann einen konisch geweiteten Bereich aufweisen, der außen dicht an einer konischen Fläche mit des Aufnahmeteils anliegt. Der aufgeweitete Teil bildet einen Abschnitt zum Einführen eines Kupplungssteckers, dessen innerer Kanaldurchmesser vorzugsweise mit dem Kanaldurchmesser des inneren Kanals des Wärmetauscherrohrs übereinstimmt.

Der Kupplungsstecker kann als gesondertes Teil ausgebildet oder an ein Rohrende angeformt sein. Er wird im Wesentlichen durch einen zylindrischen Rohrabschnitt gebildet, der in einer gewissen Distanz von seinem freien Ende mit einem Radialvorsprung versehen ist. Dieser kann durch einen aufgelöteten Ring, durch einen gestauchten Bund oder eine sonstige an dem Rohrende ausgebildete Sicke gebildet sein.

In Folge der Einfachheit der Form sowohl des Aufnahmeteils als des Kupplungssteckers können beide Teile auf einfachste Weise hergestellt werden.

Zur axialen Sicherung des Kupplungssteckers in dem Aufnahmeteil dient ein Kupplungsgehäuse mit einer Durchgangsöffnung, durch die der Kupplungsstecker hindurchsteckbar ist. Das Kupplungsgehäuse wird axial fest an dem Aufnahmeteil gesichert. Dazu dient ein Rastmittel, das das Kupplungsgehäuse bei zusammengefügter Kupplung vorzugsweise unlösbar mit dem Aufnahmeteil verbindet. Der Kupplungsstecker ist seinerseits durch ein Sicherungsmittel mit dem Kupplungsgehäuse verbunden, beispielsweise verrastet. Damit lässt sich die Kupplungseinrichtung besonders einfach montieren. Es ist lediglich zunächst das Kupplungsgehäuse mit dem Aufnahmeteil zu verrasten, wonach der Kupplungsstecker durch das Kupplungsgehäuse hindurch in die Aufnahmeöffnung des Aufnahmeteils eingesteckt und in dem Kupplungsgehäuse gesichert wird. Die gewünschte dichte Fluidverbindung ist somit hergestellt. Außerdem baut die Einrichtung sehr kurz.

Bei einer bevorzugten Ausführungsform wird das Rastmittel durch mindestens einen, vorzugsweise mehrere Rastfinger gebildet, die sich von einer Stirnseite des Kupplungsgehäuses weg erstrecken. Diese Rastfinger hintergreifen die an dem Aufnahmeteil ausgebildete Schulter und finden an deren Anlagefläche Halt. Zugleich liegen der zumindest eine Rastfinger in zusammengefügtem Zustand der Kupplungseinrichtung an der Außenumfangsfläche des Kupplungssteckers an, der mit der Schulter des Aufnahmeteils einen Spalt definiert. Die Enden des wenigstens einen Rastfingers sind in Radialrichtung gemessen dicker als der ausgebildete Spalt. Solange der Kupplungsstecker in der Aufnahmeöffnung des Aufnahmeteils sitzt ist das Kupplungsgehäuse somit unlösbar mit dem Wärmetauscher verbunden. Der Kupplungsstecker bildet somit eine Sperrvorrichtung für das Rastmittel, das das Kupplungsgehäuse mit dem Aufnahmeteil verbindet.

Das Kupplungsgehäuse ist vorzugsweise aus Kunststoff ausgebildet. Es ist vorzugsweise ein einstückiges Spritzgussteil, das sich einfach und kostengünstig herstellen lässt. Die Rastfinger sind mit dem Kupplungsgehäuse vorzugsweise einstückig verbunden. Sie weisen eine den Materialeigenschaften des Kunststoffs entsprechende geringe federnde Nachgiebigkeit auf und können somit radial nach innen federn, um mit der Schulter des Aufnahmeteils verrastet zu werden.

Das Sicherungsmittel zur Befestigung des Kupplungssteckers in dem Kupplungsgehäuse ist vorzugsweise ein Schnappring, der in einer in der Durchgangsöffnung ausgebildeten Ringnut angeordnet ist. Der Schnappring kann mit einem an dem Kupplungsstecker ausgebildeten Bund oder einer nach außen vorstehenden Rippe zusammenwirken, die an dem Schnappring eine axiale Anlage findet.

Der Schnappring weist dazu an seiner Außenseite vorzugsweise eine Einführschräge auf, während er an seiner Innenseite eine gerade Anlageschulter aufweist. Dadurch wird das Ausziehen des Kupplungssteckers aus dem Kupplungsgehäuse durch äussere Kräfte unmöglich gemacht. Jedoch kann der Schnappring beispielsweise durch ein Lösewerkzeug geweitet werden, um den Kupplungsstecker aus dem Kupplungsgehäuse herausziehen und somit die Kupplungseinrichtung öffnen zu können.

Vorzugsweise ist das zwischen dem Aufnahmeteil und dem Kupplungsstecker wirkende Dichtungselement in dem Aufnahmeteil angeordnet. Das Kupplungsgehäuse weist somit lediglich Haltefunktion auf. Dies ermöglicht die Festlegung großzügiger Toleranzen bei der Herstellung des Kupplungsgehäuses.

Ein besonderer Vorteil der Kombination des erfindungsgemäßen Wärmetauschers mit der vorgestellten Kurzkupplungseinrichtung besteht in der kurzen Baulänge in Verbindung mit der Möglichkeit der einfachen Montage und - falls erforderlich - Trennung bzw. Demontage.

Weitere Einzelheiten vorteilhafter Ausführungsformen der Erfindung sind Gegenstand der Zeichnung, der Beschreibung oder von Ansprüchen. In der Zeichnung sind Ausführungsbeispiele der Erfindung veranschaulicht. Es zeigen:
Figur 1 eine Kältemaschine mit innerem Wärmetauscher in Prinzipdarstellung,
Figur 2 den inneren Wärmetauscher der Kältemaschine nach Figur 1 in schematisierter Seitenansicht,
Figur 3 : den Wärmetauscher nach Figur 2 in Querschnittsdarstellung und in einem anderen Maßstab,
Figur 4 : ein durch ein Anschlussstück und ein Rohrende gebildetes Ende des Wärmetauschers nach Figur 2,
Figur 5 : eine abgewandelte Ausführungsform des Anschlussstücks des Wärmetauschers nach Figur 2 und

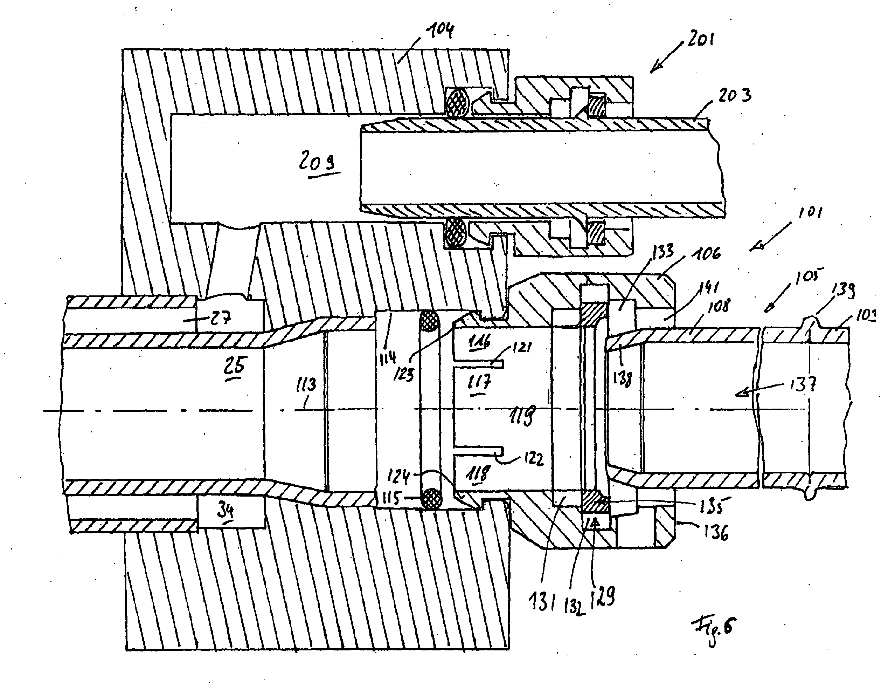

Figur 6 : ein durch ein Anschlussstück und ein Rohrende gebildetes Ende des Wärmetauschers nach Figur 2, in einer abgewandelten Ausführungsform.

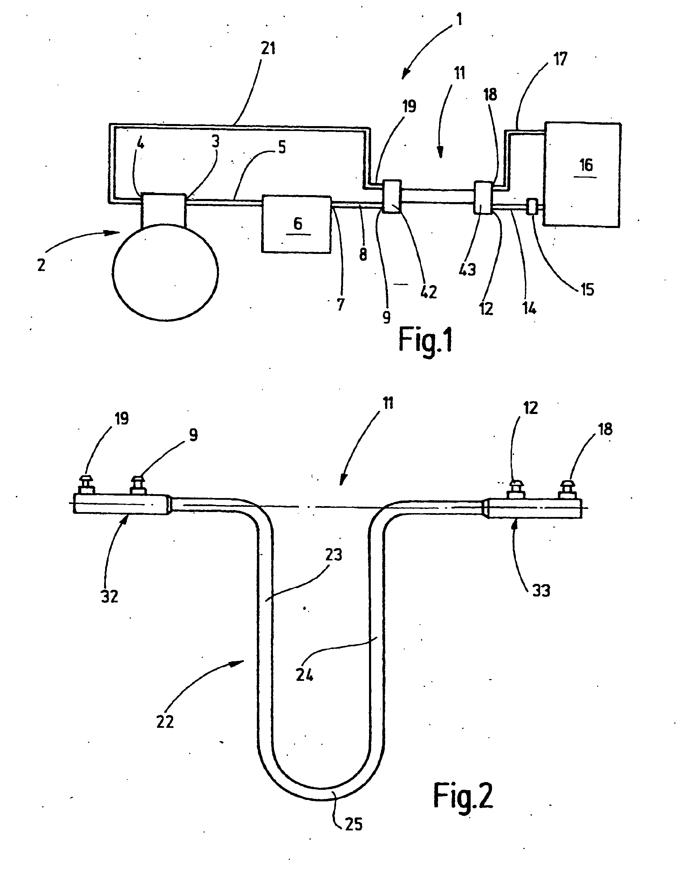

In Figur 1 ist eine Kältemaschine 1 veranschaulicht, wie sie beispielsweise in der Klimaanlage eines Kraftfahrzeugs oder auch an anderer Stelle eingesetzt werden kann. Zu der Kältemaschine 1 gehört ein Kompressor 2, der im Falle eines Kraftfahrzeugs z.B. von dem Motor desselben oder auch von einem gesonderten Elektromotor oder dergleichen angetrieben ist. Der Kompressor 2 weist einen Ausgang 3, an dem unter Druck stehendes Kältemittel ansteht, und einen Eingang 4 auf, an dem er Kältemittel mit niedrigem Druck ansaugt. Von dem Ausgang 3 führt eine Druckleitung 5 zu einem Kühler 6, an dem das verdichtete und dadurch erwärmte Kältemittel abgekühlt und kondensiert wird. Der Kühler 6 wird deshalb auch als Kondensator bezeichnet. Als Kältemittel kommt R-134a oder ein anderes so genanntes Sicherheitskältemittel, d.h. mit niedrigem Druck arbeitendes Kältemittel in Frage.

Das Kältemittel wird an einem Ausgang 7 des Kühlers an eine weitere Druckleitung 8 abgegeben, die zu einem Hochdruckeingang 9 eines inneren Kältemaschinen-Wärmetauschers 11 führt. Dieser weist einen Hochdruckausgang 12 auf, der über eine Druckleitung 14 mit einem Expansionsventil 15 verbunden ist. Dieses entspannt das Kältemittel, das in einen Verdampfer 16 eingeleitet wird. Das Kältemittel verdampft in diesem und nimmt dadurch Umgebungswärme beispielsweise zur Abkühlung von Luft in einer Klimaanlage oder zu anderen Zwecken auf. Aus dem Verdampfer wird der entstehende Kältemitteldampf über eine Niederdruckleitung 17 zu einem Niederdruckeingang 18 des Kältemaschinenwärmetauschers 11 geführt. Es durchströmt diesen im Gegenstrom zu dem über den Hochdruckeingang 9 zugeführten Kältemittel. Dabei kühlt es das unter Druck stehende Kältemittel und erwärmt sich selbst. An dem Niederdruckausgang 19 wird es erwärmt abgegeben und über eine Niederdruckleitung 21 dem Eingang 4 des Kompressors 2 zugeführt. Der innere Kältemaschinen-Wärmetauscher 11 dient der Steigerung der Effizienz der Kältemaschine. Es erhöht die Temperatur des zu dem Kompressor 2 strömenden Kältemittels und somit die Temperatur an dem Ausgang 3 des Kompressors 2. Somit gibt der Kondensator bzw. Kühler 6 eine größere Wärmemenge ab. Außerdem senkt der innere Kältemaschinen-Wärmetauscher 11 die Temperatur des dem Verdampfer 16 zugeführten Kältemittels, wodurch sich in dem Verdampfer 16 eine bessere Wärmeübertragung zu der Umgebungsluft ergibt.

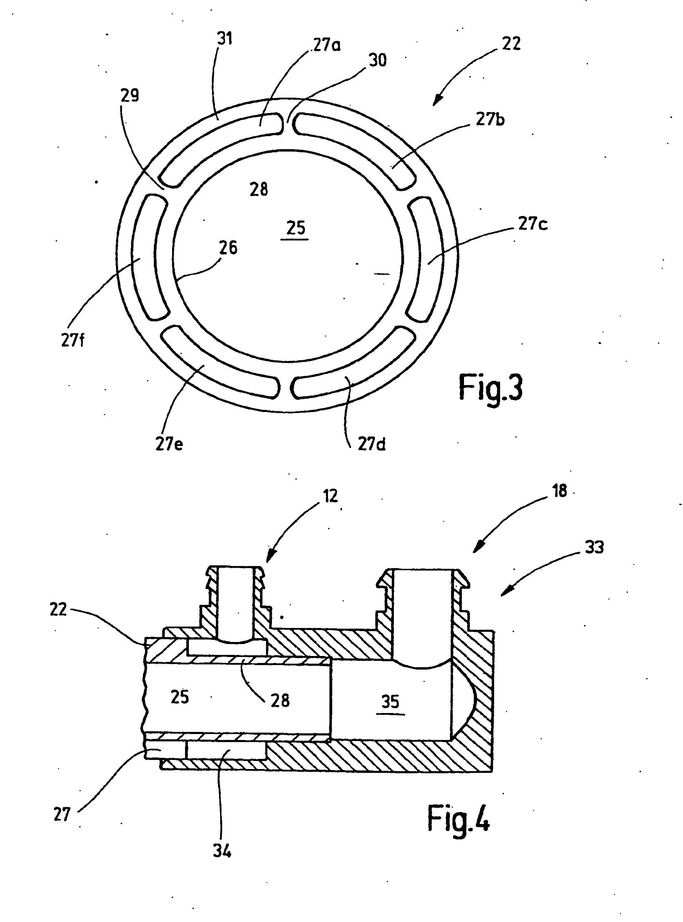

Der Kältemaschinen-Wärmetauscher 11 ist speziell auf die Bedürfnisse der Kältemaschine 1 eingerichtet, wenn diese mit einem Kältemittel für niedrigeren Druck, wie beispielsweise R-134a oder ein anderes so genanntes Sicherheitskältemittel arbeitet. Figur 2 veranschaulicht den Kältemaschinen-Wärmetauscher 11 gesondert. Er ist beispielsweise als u-förmig gebogenes Rohr 22 ausgebildet, dessen beide Schenkel 23, 24 an ihren oberen Enden voneinander weg gebogen sind, wobei sie dort auf einer gemeinsamen Achse liegen können. Der Querschnitt des Rohrs 22 ist Figur 3 zu entnehmen. Das Rohr 22 weist vorzugsweise einen inneren Hohlraum mit Kreisquerschnitt auf, der einen Niederdruckkanal 25 bildet. Seine Wandung 26 ist frei von Vertiefungen, Rippen, Vorsprüngen und sowohl in Umfangsrichtung als auch in Längsrichtung (in Figur 3 senkrecht zur Zeichenebene) vorzugsweise glatt. Der Niederdruckkanal 25 ist ein einziger Kanal - er ist nicht unterteilt; er weist keine Trennwände oder ähnliches auf.

Um den Niederdruckkanal 25 herum sind mehrere Hochdruckkanäle 27 (27a, 27b, 27c, 27d, 27e, 27f) angeordnet. Die Hochdruckkanäle 27 sind von dem Niederdruckkanal 25 durch einen radial innen liegenden Wandabschnitt 28 getrennt, der einem Kreisbogen folgt. In Umfangsrichtung werden die Hochdruckkanäle 27 von radial gerichteten Wandabschnitten 29, 30 begrenzt, deren radiale Länge wesentlich geringer ist als der zwischen ihnen in Umfangsrichtung zu messende Abstand. Parallel zu dem Wandabschnitt 28 ist ein weiterer Wandabschnitt 31 vorgesehen, der einem Kreis folgt und den Hochdruckkanal 27 radial nach außen abschließt.

Der Niederdruckkanal 25 nimmt den größten Teil des Querschnitts des Rohrs 22 ein. Weist das Rohr 22 beispielsweise einen Außendurchmesser von 25 mm auf, beträgt der Durchmesser des Niederdruckkanals 25 beispielsweise 15 mm. Die radial zu messende Höhe der Hochdruckkanäle 27 beträgt z.B. 3 mm bis 4 mm. Der Winkelabstand der Wandabschnitte 29, 30 unter einander beträgt vorzugsweise etwa 60°. Damit liegt der Abstand der Wandabschnitte 29, 30 voneinander ebenfalls im Bereich von ungefähr 18 mm. Damit ist die Summe der Querschnitte aller Hochdruckkanäle 27a bis 27f deutlich geringer als die Querschnittsfläche des Niederdruckkanals 25. Trotz besonders weitem Niederdruckkanal 25 wird ein äußerst geringer Außendurchmesser erreicht.

Dieses Wärmetauscherrohr ist hinsichtlich der Effizienz der Kälteanlage 1 optimiert. Druckverluste an der Saugseite des Kompressors 2, die zu erheblichen Effizienzverlusten führen könnten, werden vermieden. Andererseits wird ein guter Wärmeübergang sicher gestellt und ein Rohrprofil vorgeschlagen, das sich zuverlässig herstellen und auch in die Figur 2 veranschaulichte Form biegen lässt.

Wie Figur 2 zeigt, ist der Kältemaschinen-Wärmetauscher 22 an beiden Enden mit Anschlussstücken 32, 34 versehen, an denen der Hochdruckeingang 9, der Hochdruckausgang 12, der Niederdruckeingang 18 und der Niederdruckausgang 19 ausgebildet. Der Aufbau des Anschlussstücks 33 ist in Figur 4 gesondert veranschaulicht. Er stimmt im Wesentlichen mit dem Aufbau des Anschlussstücks 32 überein.

Das Anschlussstück 33 ist mit dem Rohr 22 verklebt, verschweißt oder anderweitig fluiddicht verbunden. Dabei ist ein Teil des inneren Wandabschnitts 28 frei gelegt, so dass er sich weiter in das Anschlussstück 25 hinein erstreckt als der von dem äußeren Wandabschnitt 31 und den Wandabschnitten 28, 29 gebildete Teil. In dem Anschlussstück 33, das durch' einen Aluminiumkörper, Kunststoffkörper oder dergleichen gebildet sein kann, sind zwei Kammern 34, 35 ausgebildet. Während die Kammer 34 eine ringförmige Kammer ist, die mit den Hochdruckkanälen 27 kommuniziert, ist die Kammer 35 eine etwa zylindrische Kammer, die mit dem Niederdruckkanal 25 kommuniziert. Beide Kammern 34, 35 sind jeweils mit Anschlüssen versehen, die hier den Hochdruckausgang 12 und den Niederdruckeingang 18 bilden. Der Hochdruckausgang 12 und der Niederdruckeingang 18 können als Rohranschlüsse oder, wie dargestellt, auch als Schlauchanschlüsse ausgebildet sein. Wesentlich ist, dass der Querschnitt der Kammer 35 im Wesentlichen mit dem Querschnitt des Niederdruckkanals 25 übereinstimmt, der im Übrigen auch mit dem Querschnitt des Niederdruckeingangs 18 im Wesentlichen übereinstimmt. Auf diese Weise wird das durch den Niederdruckkanal 25 strömende Fluid im Übergang von dem Wärmetauscher zu der anschließenden Leitung weder beschleunigt noch verzögert. Außerdem geht das Bestreben dahin, scharfe Kanten und Fluidumlenkungen in dem Niederdruckkanal weitgehend zu vermeiden, um den Strömungswiderstand zu minimieren.

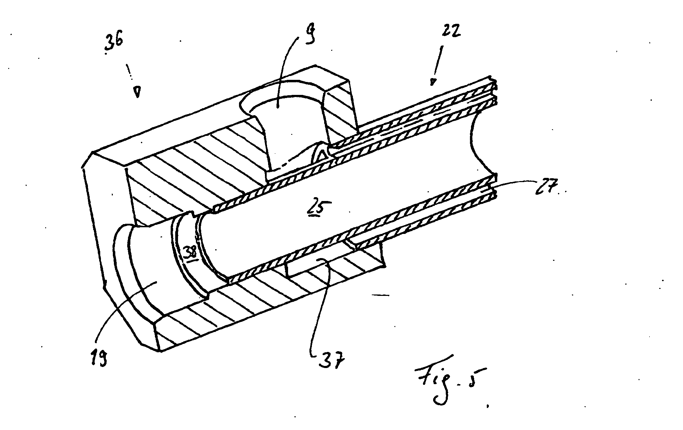

In dieser Hinsicht ist die in Figur 5 veranschaulichte Ausführungsform eines Anschlussstücks 36 optimiert. Es besteht, wie das vorstehend beschriebene Anschlussstück, aus Metall, wie beispielsweise Aluminium oder auch aus einem Kunststoff. Es kann mit dem Rohr 22 verklebt, verlötet oder verschweißt sein, wobei jeweils eine für die gewählten Materialien geeignete Verbindungsart zur dauerhaften fluiddichten Verbindung gewählt wird.

Das Anschlussstück 36 weist wiederum eine Kammer 37 für den Hochdruckeingang 9 auf, die mit den Hochdruckkanälen 27 kommuniziert. Der Hochdruckeingang 9 zweigt in Radialrichtung ab. Dagegen mündet der Niederdruckkanal 25 in eine vorzugsweise zylindrische Kammer 38, deren Durchmesser mit dem Durchmesser des Niederdruckkanals 25 weitgehend übereinstimmt. Die Kammer 38 geht in den Niederdruckausgang 19 über, der als Bohrung mit Innengewinde, als Passsitz für eine einzuschweißende oder einzuklebende Leitung oder anderweitig ausgebildet sein kann. Er ist vorzugsweise so bemessen, dass ein Rohr oder Nippel eingeführt und darin gesichert werden kann, dessen innere Weite mit der inneren Weite des Niederdruckkanals 25 übereinstimmt, wobei vorzugsweise ein stufenloser Strömungsübergang ermöglicht wird. Ein gleiches Anschlussstück kann an dem gegenüber liegenden Ende des Rohrs 22 vorgesehen werden. Dies hat den Vorzug, dass das unter niedrigem Druck stehende, dem Kompressor zuströmende und somit lediglich eine geringe Dichte aufweisende Kältemittel eine hohe Strömungsgeschwindigkeit entwickeln kann, wobei Druckverluste weitgehend minimiert werden. Dies wird erreicht, indem der Niederdruckkanal 25 eine Weite aufweist, die zumindest so groß oder größer ist wie die lichte Weite der Anschlussleitungen d.h. der Niederdruckleitung 17 und der Niederdruckleitung 21.

In Figur 5 ist ein Wärmetauscher 11 mit einer Kupplungseinrichtung 101 im Ganzen veranschaulicht, die zur Verbindung des Niederdruckkanals 25 mit einer fluidführenden Leitung 103 dient. Die Leitung 103 kann beispielsweise eine Rohrleitung aus einem geeigneten Metall, wie Aluminium, Strahl, Kupfer oder dergleichen oder auch Kunststoff sein. Das Ende des Niederdruckkanals 25 ist als Rohrende über den Wärmetauscher 11 überstehend ausgebildet. Es trägt ein Aufnahmeteil 104 während das Ende der Leitung 103 einen Kupplungsstecker 105 bildet. Um das Aufnahmeteil 104 und den Kupplungsstecker 105 aneinander zu sichern, ist ein KUpplungsgehäuse 106 vorgesehen. Dieses ist beispiels- und vorzugsweise ein aus einem Kunststoff ausgebildetes Spritzgussteil.

Das Aufnahmeteil 104 ist beispielsweise auf das Ende des Niederdruckkanals 25 aufgeklebt. Das Ende des Niederdruckkanals 25 kann dazu nach dem Aufsetzen des Aufnahmeteils 104 geeignet aufgeweitet werden, so dass ein zylindrischer Abschnitt 107 entsteht, dessen Innendurchmesser größer ist als der Außendurchmesser eines zylindrischen Abschnitts 108 des Kupplungssteckers 105.

Der aufgeweitete Abschnitt 107 des Rohrendes des Niederdruckkanals 25 und das Aufnahmeteil 104 definieren eine Aufnahmeöffnung für den Kupplungsstecker 105.

Das Aufnahmeteil 104 weist an seiner Mündung einen nach innen weisenden Rand 111 auf. Seine Innenfläche weist zu dem Fluidkanal 110 und bildet eine Schulter 112. Die Schulter 112 bildet eine ringförmige Anlagefläche auf, die im vorliegenden Ausführungsbeispiel eben ausgebildet ist. Sie ist dabei konzentrisch und rechtwinklig zu einer Mittelachse 113 der Aufnahmeöffnung 109 orientiert. An die Schulter 112 schließt sich eine ringförmige zylindrische Fläche 114 an, deren Durchmesser etwas größer ist als der Außendurchmesser des Abschnitts 108 des Kupplungssteckers 105, jedoch deutlich kleiner als der Innendurchmesser des sonstigen Abschnitts 107. Dieser nimmt ein Dichtungselement 115 beispielsweise in Form eines O-Rings oder in Form einer anderen geeigneten Dichtung auf.

Das Kupplungsgehäuse 106 ist mittels wenigstens eines, vorzugsweise mehrerer Rastfinger 116, 117, 118 an der Kupplungsbuchse 104 gehalten. Sie erstrecken sich dazu in Axialrichtung von einer ringförmigen Endfläche des Kupplungsgehäuse 106 weg und umschließen eine Durchgangsöffnung 119, deren Innendurchmesser zumindest im Bereich der Finger 116, 117, 118 nur ganz geringfügig größer ist als der Außendurchmesser des Abschnitts 108. Die Durchgangsöffnung 119 wird im Bereich der Finger 116, 117, 118 von einer zylindrischen Wandung umgrenzt.

Die Finger 116, 117, 118 sind untereinander gleich ausgebildet. Sie sind voneinander durch in Axialrichtung ausgebildete Schlitze 121, 122 getrennt. Die Finger 116, 117, 118 bestehen aus dem gleichen Kunststoff wie das Kupplungsgehäuse 106 und sind einstückiger Bestandteil desselben. Sie sind geringfügig flexibel und können somit radial nach innen federn. Jeder Finger 116, 117, 118 weist an seinem äußeren freien Ende einen Kopf 123, 124 auf, der an der der Schulter 112 zugewandten Seite mit einer Anlagefläche versehen ist. Diese ist übereinstimmend mit der entsprechenden Anlagefläche der Schulter 112 orientiert. An seiner gegenüber liegenden Seite ist der Kopf 123, 124 mit einer Schrägfläche versehen. Die radiale Dicke des Kopfs 123, 124 ist größer als die radiale Breite des zwischen der Fläche 114 und der Mantelfläche des Abschnitts 108 gebildete Spalt. Die Finger 116, 117, 118 bilden somit in Verbindung mit der Schulter 112 ein Rastmittel zur Sicherung des Kupplungsgehäuses 106 an dem Aufnahmeteil 104.

Im Weiteren weist das Kupplungsgehäuse 106 außen eine im Wesentlichen zylindrische Form auf. Die Durchgangsöffnung 109 ist mit einer Ringnut 129 versehen, die einen abgestuften Durchmesser aufweist. Ein erster Nutabschnitt 131 weist einen relativ geringen Durchmesser auf. Ein sich anschließender zweiter Nutabschnitt 132 weist einen großen Durchmesser auf während ein dritter Nutabschnitt 133 einen Durchmesser aufweist, der zwischen dem des ersten Nutabschnitts 131 und des zweiten Nutabschnitts 132 liegt. Des Weiteren setzt sich die Durchgangsöffnung dann bis zu der Stirnseite 134 des Kupplungsgehäuses 106 mit einem Durchmesser fort, der etwas größer als der des Abschnitts 108 ist.

Die Ringnut 129 nimmt einen Sicherungsring 135 auf, der als Schnappring ausgebildet ist. Er ist im Wesentlichen kreisförmig ausgebildet und geschlitzt. An seiner der Stirnseite 134 zugewandten Seite ist er mit einer Einführschräge versehen. An seiner gegenüber liegenden Seite ist er hingegen im Wesentlichen plan. In entspanntem Zustand ist sein Innendurchmesser vorzugsweise ebenso groß oder geringfügig größer wie der Außendurchmesser des Abschnitts 108. In entspanntem Zustand nimmt der Sicherungsring 135 seinen kleinsten Durchmesser ein. Er liegt dabei an der zwischen den Nutabschnitten 131, 132 gebildeten Schulter an und kann nicht in den Nutabschnitt 131 gelangen. Hingegen kann er in den Nutabschnitt 133 überführt werden.

Der Kupplungsstecker 105 umschließt einen Fluidkanal 137 und bildet beispielsweise das Ende einer Rohrleitung, die mit einer in Figur 5 nicht veranschaulichten Ringwulst versehen ist. Er kann jedoch auch als gesondertes Teil ausgebildet sein, das nachträglich mit einer Leitung, wie beispielsweise mit einer Metallrohrleitung oder einer Kunststoffleitung durch Löten, Kleben oder andere geeignete Verbindungstechniken verbunden ist. An seinem freien Ende ist der Kupplungsstecker 105 mit einem sich konisch verjüngenden Stirnabschnitt 138 versehen. Dieser erleichtert das Einstecken des Kupplungssteckers 105 in das Aufnahmeteil 104. Zum Zusammenwirken mit dem Sicherungsring 135 ist der Kupplungsstecker 105 in einem gewissen Abstand zu dem außen konischen Stirnabschnitt 138 mit einer ringförmigen Rippe versehen, die als Radialflansch ausgebildet ist. Die Rippe 139 ist vorzugsweise durch einen Umformvorgang (Kaltumformen) erzeugt, bei dem die Wandung des Abschnitts 108 des Kupplungssteckers 105 eine ringförmige, sich radial nach außen erstreckende Falte bildet. Diese ragt über den Außendurchmesser des Abschnitts 108 hinaus und ist deutlich größer als der Innendurchmesser des entspannten Sicherungsrings 135.

Die insoweit beschriebene Kupplungseinrichtung 101 funktioniert wie folgt:

Der Kupplungsstecker 105 wird mit seinem Abschnitt 108 in die Durchgangsöffnung 119 des Kupplungsgehäuses 106 eingeführt und durch die Durchgangsöffnung 119 hindurch in die Aufnahmeöffnung 109 des Aufnahmeteils 104 und das aufgeweitete Ende des Niederdruckkanals 25 des Wärmetauschers 11 geführt. Dabei sichert der Abschnitt 108 die Rastfinger 116 (117), 118 in dem zwischen der Außenumfangsfläche des Abschnitts 108 und der Innenumfangsfläche 114 gebildeten Spalt. Die Köpfe 123, 124 sind hinter der Schulter 112 gefangen und verhindern somit ein Abziehen des Kupplungsgehäuses 106 von Aufnahmeteil 104.

Des Weiteren hat der Abschnitt 108 das Dichtungselement 115 in Radialrichtung komprimiert und somit eine Fluiddichtheit herbeigeführt.

Beim weiteren Einschieben des Kupplungssteckers 105 in das Kupplungsgehäuse 106 und die Kupplungsbuchse 104 findet die ringförmige Rippe 139 Anlage an der Einführschräge 136 des Sicherungsrings 135. Beim weiteren Einschieben des Kupplungssteckers 105 in das Kupplungsgehäuse 106 wird dadurch der Ring 135 erst aufgeweitet und springt dann auf seinen ursprünglichen Durchmesser zurück. Die Rippe 139 befördert nun den Sicherungsring 135 in den Nutabschnitt 133, der enger als der Nutabschnitt 132 ist, in dem sich der Sicherungsring 135 zuvor aufweiten konnte. Der Sicherungsring 135 sichert somit den Kupplungsstecker 105 in dem Kupplungsgehäuse 106. Nachdem dieses mittels der Rastfinger 116, 117, 118 selbst an der Kupplungsbuchse 104 gesichert ist, kann der Kupplungsstecker 105 nicht mehr aus dem Kupplungsgehäuse 106 und der Kupplungsbuchse 104 herausgezogen werden. Außerdem zentriert der Sicherungsring 135 den Kupplungsstecker 105. Die fluiddichte Verbindung ist somit sicher und dauerhaft hergestellt.

Soll die Kupplungseinrichtung 101 gelöst werden, wird der Sicherungsring 135 mittels eines in den Ringspalt 141 eingeführten Lösewerkzeuges beispielsweise in Form einer Lösehülse oder Lösestifte in den Nutabschnitt 132 zurück geschoben und dort gehalten. Kräftiger Zug an dem Kupplungsstecker 105 kann nun ein Aufweiten des Sicherungsrings 135 bewirken, wodurch der Kupplungsstecker 105 aus der Kupplungsbuchse 104 und dem Kupplungsgehäuse heraus gezogen werden kann.

Das Aufnahmeteil sitzt dicht auf der äußeren Mantelfläche des Wärmetauschers 11. Die Hochdruckkanäle 27 münden in einen Ringraum 34, der über einen Kanal 202 mit einer Einführöffnung 209 verbunden ist. Diese gehört zu einer Kupplungseinrichtung 201, die entsprechend der Kupplungseinrichtung 101 ausgebildet ist. Sie dient dem Anschluss einer Leitung 203, die mit den Hochdruckkanälen 27 kommuniziert.

Ein die Effizienz einer Kältemaschine 1 erhöhender innerer Kältemaschinen-Wärmetauscher 11 weist ein Rohr 22 auf, dessen Niederdruckkanal 25 innen angeordnet ist und einen wesentlich größeren Querschnitt aufweist als alle an dem Rohr 22 vorhandenen außen liegenden Hochdruckkanäle 27. Außerdem ist die lichte Weite des Niederdruckkanals mindestens so groß wie die lichte Weite der Anschlussleitungen 17, 21. Die Wandung des Niederdruckkanals 25 ist vorzugsweise glatt.

## Patentansprüche

1. Kältemaschine (1) mit einem Sicherheitskältemittel und mit einem inneren Kältemaschinen-Wärmetauscher (11),
bestehend aus einem Rohr (22), das einen inneren Niederdruckkanal (25), der zum Anschluss an die Saugseite eines Kältemittelkompressors (2) eingerichtet ist, und mindestens sechs, höchstens acht Hochdruckkanäle (27a, 27b, 27c, 27d, 27e, 27f) aufweist, die zum Anschluss an die Druckseite des Kältemittelkompressors (2) eingerichtet sind, wobei:
a. der Niederdruckkanal (25) einen im Wesentlichen zylindrischen Querschnitt aufweist, der eine Innenquerschnittsfläche festlegt, wobei der Niederdruckkanal (25) von einer glatten, unverrippten Wandung (26) umgeben ist,
b. die Hochdruckkanäle (27a, 27b, 27c, 27d, 27e, 27f) um den Niederdruckkanal (25) herum angeordnet und durch radial angeordnete Zwischenwände (29, 30) voneinander getrennt sind, wobei die Summe ihrer jeweiligen Querschnittflächen eine Außenquerschnittsfläche festlegt, und
c. die Innenquerschnittsfläche größer als die Außenquerschnittsfläche ist,
wobei jeder Hochdruckkanal (27a, 27b, 27c, 27d, 27e, 27f) von einem radial innenliegenden Wandabschnitt (28), zwei radial orientierten Wandabschnitten (29, 30) und einem radial außenliegenden Wandabschnitt (31) begrenzt ist wobei der an den Kanal (27a, 27b, 27c, 27d, 27e, 27f) grenzende Teil des radial innenliegenden Wandabschnitts (28) länger ist als das Dreifache der radialen Wandabschnitte (29, 30).

2. Kältemaschine nach Anspruch 1, **dadurch gekennzeichnet, dass** die Innenquerschnittsfläche (25) größer als das 1,6-fache der Außenquerschnittsfläche ist.

3. Kältemaschine nach Anspruch 1, **dadurch gekennzeichnet, dass** das Rohr (22) aus extrudiertem Leichtmetall besteht.

4. Kältemaschine nach Anspruch 1, **dadurch gekennzeichnet, dass** der an den Kanal (27) grenzende Teil des radial innenliegenden Wandabschnitts (28) länger ist als das Doppelte der radialen Wandabschnitte (29, 30).

5. Kältemaschine nach Anspruch 1, **dadurch gekennzeichnet, dass** die Anzahl der außenliegenden Hochdruckkanäle (27) höchsten 6 beträgt.

6. Kältemaschine nach Anspruch 1, **dadurch gekennzeichnet, dass** das Rohr (22) einen kreisförmigen Außenumriss aufweist.

7. Kältemaschine nach Anspruch 6, **dadurch gekennzeichnet, dass** der Außendurchmesser des Rohrs (22) kleiner oder gleich 25 mm ist.

8. Kältemaschine nach Anspruch 1, **dadurch gekennzeichnet, dass** der Niederdruckkanal (25) des Rohrs (22) mit einem Anschlussstück (37) versehen ist, von dem der Anschluss (19) des Niederdruckkanals axial abgeht.

9. Kältemaschine nach Anspruch 1, **dadurch gekennzeichnet, dass** der Niederdruckkanal (25) eine Weite aufweist, die zumindest so groß ist, wie die Weite seines Anschlusses (19).

10. Kältemaschine nach Anspruch 1, **dadurch gekennzeichnet, dass** der Niederdruckkanal (25) eine Weite aufweist, die zumindest so groß ist, wie die Weite angeschlossener Leitungen (17, 21).

## Claims

1. A cooler (1) with a safety refrigerant and with an inner cooler-heat exchanger (11),
consisting of a tube (22), which has one inner low-pressure channel (25), which is configured for connection to the suction side of a refrigerant compressor (2), and at least six, at most eight high-pressure channels (27a, 27b, 27c, 27d, 27e, 27f), which are configured for connection to the pressure side of the refrigerant compressor (2), wherein:
a. the low-pressure channel (25) has a substantially cylindrical cross-section, which defines an inner cross-sectional area, wherein the low-pressure channel (25) is surrounded by a smooth, unribbed wall (26),
b. the high-pressure channels (27a, 27b, 27c, 27d, 27e, 27f) are arranged around the low-pressure channel (25) and are separated by radially arranged intermediate walls (29, 30), whereby the sum of their respective cross-sectional areas defines an outer cross-sectional area, and
c. the inner cross-sectional area is larger than the outer cross-sectional area, whereby each high-pressure channel (27a, 27b, 27c, 27d, 27e, 27f) is delimited by one radially inner wall section (28), two radially directed wall sections (29, 30) and one radially outward wall section (31),
whereby the part adjacent the channel (27a, 27b, 27c, 27d, 27e, 27f) of the radially inner wall section (28) is longer than three times the radial wall sections (29, 30).

2. The cooler according to Claim 1, **characterized in that** the inner cross-sectional area (25) is greater than 1.6 times the outer cross-sectional area.

3. The cooler according to Claim 1, **characterized in that** the tube (22) consists of extruded light metal.

4. The cooler according to Claim 1, **characterized in that** the part of the radially inner wall section (28) adjacent the channel (27) is longer than twice the radial wall sections (29, 30).

5. The cooler according to Claim 1, **characterized in that** the number of external high-pressure channels (27) is no more than 6.

6. The cooler according to Claim 1, **characterized in that** the tube (22) has a circular outer perimeter.

7. The cooler according to Claim 6, **characterized in that** the outer diameter of the tube (22) is smaller than or equal to 25 mm.

8. The cooler according to Claim 1, **characterized in that** the low-pressure channel (25) of the tube (22) is provided with a connecting piece (37), from which the connection (19) of the low-pressure channel departs axially.

9. The cooler according to Claim 1, **characterized in that** the low-pressure channel (25) has a width which is at least as large as the width of the connection (19).

10. The cooler according to Claim 1, **characterized in that** the low-pressure channel (25) has a width which is at least as large as the width of connected lines (17, 21).

## Revendications

1. Machine frigorifique (1) comportant un agent frigorifique de sécurité et un échangeur de chaleur interne (11),
constituée par un tube (22) qui comporte un canal basse pression interne (25), configuré pour être raccordé au côté aspiration d'un compresseur d'agent frigorifique (2), et au moins six, mais au maximum huit, canaux haute pression (27a, 27b, 27c, 27d, 27e, 27f) configurés pour être raccordés au côté pression du compresseur d'agent frigorifique (2), dans lequel :
a. le canal basse pression (25) présente une section transversale essentiellement cylindrique qui définit une surface de section transversale interne, le canal basse pression (25) étant entouré par une paroi lisse sans nervure (26),
b. les canaux haute pression (27a, 27b, 27c, 27d, 27e, 27f) sont disposés tout autour du canal basse pression (25) et sont séparés par des parois intermédiaires (29, 30) disposées radialement, la somme de leurs surfaces de section transversale respectives définissant une surface de section transversale externe, et
c. la surface de section transversale interne est plus grande que la surface de section transversale externe, chaque canal haute pression (27a, 27b, 27c, 27d, 27e, 27f) étant délimité par une section de paroi (28) radialement intérieur, deux sections de paroi (29, 30) orientées radialement et une section de paroi (31) radialement extérieur, la partie de la section de paroi (28) radialement intérieur qui borde le canal (27a, 27b, 27c, 27d, 27e, 27f) étant plus longue que le triple des sections de paroi radiales (29, 30).

2. Machine frigorifique selon la revendication 1, **caractérisée en ce que** la section de section transversale interne (25) est plus grande que 1,6 fois la section de section transversale externe.

3. Machine frigorifique selon la revendication 1, **caractérisée en ce que** le tube (22) se compose d'un métal léger extrudé.

4. Machine frigorifique selon la revendication 1, **caractérisée en ce que** la partie de la section de paroi (28) radialement intérieur qui borde le canal (27) est plus longue que le double des sections de paroi radiales (29, 30).

5. Machine frigorifique selon la revendication 1, **caractérisée en ce que** le nombre de canaux haute pression extérieurs (27) est au maximum de 6.

6. Machine frigorifique selon la revendication 1, **caractérisée en ce que** le tube (22) présente un périmètre externe circulaire.

7. Machine frigorifique selon la revendication 6, **caractérisée en ce que** le diamètre externe du tube (22) est inférieur ou égal à 25 mm.

8. Machine frigorifique selon la revendication 1, **caractérisée en ce que** le canal basse pression (25) du tube (22) est pourvu d'une pièce de raccordement (37) à partir de laquelle le raccordement (19) du canal basse pression s'écarte axialement.

9. Machine frigorifique selon la revendication 1, **caractérisée en ce que** le canal basse pression (25) présente une largeur qui est au moins grande que la largeur du raccordement (19).

10. Machine frigorifique selon la revendication 1, **caractérisée en ce que** le canal basse pression (25) présente une largeur qui est au moins grande que la largeur des conduites raccordées (17, 21).
